# EUROPEAN PATENT APPLICATION

(11) **EP 4 520 552 A1**
(43) Date of publication of application: **12.03.2025**
(21) Application number: 23799691.3
(22) Date of filing: 03.05.2023
(51) Int. Cl.: B60C 15/00, B60C 15/06

(54) **TIRE HAVING BEAD PORTION FOR IMPROVING TRANSVERSE RIGIDITY AND DURABILITY**

(30) Priority: 03.05.2022 KR 20220054656
(71) Applicant: HANKOOK TIRE & TECHNOLOGY CO., LTD, Gyeonggi-do 13494 (KR)
(72) Inventor: PARK, Moon Cheol, Daejeon 34127 (KR); KIM, Sun Myung, Daejeon 34127 (KR)
(74) Representative: Zinkler, Franz
(86) International application number: PCT/KR2023/006079
(87) International publication number: WO 2023/214810

(57) **Abstract**

An embodiment of the present invention provides a tire having a bead portion for improving transverse rigidity and durability. The tire having a bead portion for improving transverse rigidity and durability according to an embodiment of the present invention comprises: a bead bundle positioned on the bead portion of the tire; a bead filler having a lower end portion coupled to the upper surface portion of the bead bundle, the bead filler being disposed to extend from the bead bundle to a side wall; a carcass coupled to the inner surface of the side wall of the tire and disposed to extend such that the inner surface of the bead filler and the lower portion of the bead bundle are surrounded; an inner liner coupled to the inner surface of the carcass and disposed to extend to the bottom surface portion of the carcass; rim cushion rubber coupled to extend from the lower inner surface of the inner liner to the bottom surface portion of the carcass, thereby surrounding one edge of the carcass, the rim cushion rubber being disposed to extend to the upper portion of the bead filler; and side wall rubber coupled to the upper portion of the carcass and disposed to extend to the rim cushion rubber, thereby being coupled to the upper end portion of the bead filler and to the rim cushion rubber. One edge corresponding to one end of the carcass is disposed adjacent to the bead bundle and is positioned below a rim flange of the tire.

## Description

### Technical Field

The present invention relates to a tire having a bead portion for improving transverse rigidity and durability, and more specifically, to a tire having a bead portion for improving transverse rigidity and durability, which improves handling performance by improving the transverse rigidity of the bead portion.

### Background Art

Generally, a pneumatic tire is composed of an inner liner forming the inside of the tire, a body ply laminated at the outside of the inner liner, a carcass on the body ply, a belt laminated on the carcass at the outside of the inner body ply, a tread laminated at the outside of the belt, a side wall forming both sides of the tire, and a bead coupled to a wheel.

The carcass is composed of a cord layer wrapped with rubber as the skeleton of the tire, and must be strong enough to support strong air pressure and flexible enough to absorb load changes and shocks.

The structure of this carcass is largely divided into STUH where the carcass end is located under the belt, HTUH where the carcass end is located on the upper shoulder SH, MTUH where the carcass end is located on lower shoulder SH, and LTUH where the carcass end is located below a rim check line.

In the existing small diameter forming method, the carcass is turned up, and the turn-up edge is mostly located differently depending on the LTUH, MTUH, HTUH, and STUH.

Since in the turn-up edge of the carcass, which is a discontinuous point without a connection structure, cracks and separations are likely to start, there is a need to find a turn-up edge that is advantageous to durability for each tire standard and to supplement it.

### <Related art document>

US 9248704

### Detailed Description of the Invention

### Technical Problem

The present invention is to provide a tire having a bead portion for improving transverse rigidity and durability by improving transverse rigidity and durability of a carcass forming the skeleton of the tire by preventing cracks and separation at discontinuities of a carcass turn-up edge.

The aspect of the present invention is not limited to that mentioned above, and other aspects not mentioned will be clearly understood by those skilled in the art from the description below.

### Technical Solution

The present invention includes: a bead bundle positioned on the bead portion of the tire; a bead filler having a lower end portion coupled to an upper surface portion of the bead bundle and disposed to extend from the bead bundle to a side wall; a carcass coupled to the inner surface of the side wall of the tire and disposed to extend to surround the inner surface of the bead filler and the lower portion of the bead bundle; an inner liner coupled to the inner surface of the carcass and disposed to extend to the bottom surface of the carcass; rim cushion rubber coupled to extend from the lower inner surface of the inner liner to the bottom surface portion of the carcass to surround one edge of the carcass and disposed to extend to the upper portion of the bead filler; and side wall rubber coupled to to the upper portion of the carcass to be disposed to extend to the rim cushion rubber, thereby being coupled to the upper end portion of the bead filler and the rim cushion rubber, wherein the one edge corresponding to one end portion of the carcass is positioned adjacent to the bead bundle, and below a rim flange of the tire.

According to an embodiment of the present invention, the bead filler may include: bead filler rubber coupled to the upper surface portion of the bead bundle; and profile-type rubber coupled to the bead filler rubber, wherein the upper end portion of the bead filler rubber and the lower end portion of the profile-type rubber are provided with first rubber coupling surfaces that are coupled at an angle while being staggered from each other.

According to an embodiment of the present invention, the upper portion of the bead filler rubber may be coupled to the inner surface of the rim cushion rubber, and the lower portion thereof may be coupled to the carcass to support the edge of the carcass.

According to an embodiment of the present invention, the upper end portion of the rim cushion rubber and the lower end portion of the side wall rubber may be provided with second rubber coupling surfaces that are coupled at an angle while being staggered from each other.

According to an embodiment of the present invention, one surface of the upper end portion of the profile-type rubber may be coupled to the carcass and the other surface thereof may be coupled to a boundary area of the second rubber coupling surfaces.

According to an embodiment of the present invention, the height Y1 from the upper end of the profile-type rubber to the upper end of the bead filler rubber may be set to 10 mm to 55 mm, the height Y2 from the upper end of the bead filler rubber to the upper end of the bead bundle may be set to 15 mm to 35 mm, the height Y3 of the edge of the carcass on the bead bundle may be set to 5 mm to 15 mm, and the height Y4 from the lower end of the profile-type rubber to the upper end of the bead filler rubber may be set to 7 mm to 30 mm.

According to an embodiment of the present invention, the height Y1+Y2 from the upper end of the profile-type rubber to the upper surface portion of the bead bundle to which the bead filler rubber is coupled may be set to 36% to 50% of a tire cross-section height.

According to an embodiment of the present invention, the profile-type rubber may be provided with a thickness of 0.01 mm to 5.5 mm, and the thickness of the profile-type rubber may be 0.5 mm to 1.5 mm at a lower side 5 mm away from the upper end of the profile-type rubber, and may be 1.2 mm to 2.8 mm at a lower side 10 mm away from the upper end of the profile-type rubber.

According to an embodiment of the present invention, the thickness of the rim cushion rubber measured at the lower end of the side wall rubber may be 4.8 mm to 9 mm, and the thickness of the rim cushion rubber measured at the edge of the carcass may be 2 mm to 5 mm.

According to an embodiment of the present invention, the profile-type rubber may have lower hardness than the bead filler rubber.

### Advantageous Effects

An effect of the present invention according to the above configuration is that it is possible to provide a tire having a bead portion for improving transverse rigidity and durability by improving transverse rigidity and durability of a carcass forming the skeleton of the tire by preventing cracks and separation at discontinuities of a carcass turn-up edge.

The effects of the present invention are not limited to the effects described above, and should be understood to include all effects that are inferable from the configuration of the present invention described in the detailed description or claims of the present invention.

### Brief Description of the Drawings

FIG. 1 is a cross-sectional view of a part of a tire having a bead portion for improving transverse rigidity and durability according to an embodiment of the present invention.
FIG. 2 is a cross-sectional view showing numerical symbols for expressing design implementation of FIG. 1.
FIG. 3 is structural analysis result data for KL 12.35 kgf/mm of a general bead (bead structure) and carcass 1Ply STUH for comparison with the present embodiment.
FIG. 4 is structural analysis result data for KL 13.01 kgf/mm of a new bead layout structure and carcass 1Ply LTUH according to the present embodiment.

### Best Mode for Carrying Out the Invention

The present invention includes: a bead bundle positioned on the bead portion of the tire; a bead filler having a lower end portion coupled to an upper surface portion of the bead bundle and disposed to extend from the bead bundle to a side wall; a carcass coupled to the inner surface of the side wall of the tire and disposed to extend to surround the inner surface of the bead filler and the lower portion of the bead bundle; an inner liner coupled to the inner surface of the carcass and disposed to extend to the bottom surface of the carcass; rim cushion rubber coupled to extend from the lower inner surface of the inner liner to the bottom surface portion of the carcass to surround one edge of the carcass and disposed to extend to the upper portion of the bead filler; and side wall rubber coupled to to the upper portion of the carcass to be disposed to extend to the rim cushion rubber, thereby being coupled to the upper end portion of the bead filler and the rim cushion rubber, wherein the one edge corresponding to one end portion of the carcass is positioned adjacent to the bead bundle, and below a rim flange of the tire.

### Mode for Carrying Out the Invention

Hereinafter, the present invention will be described with reference to the accompanying drawings. However, the present invention may be implemented in various different forms and, therefore, is not limited to the examples described herein. In order to clearly explain the present invention in the drawings, portions unrelated to the description are omitted, and similar portions are given similar reference numerals throughout the specification.

Throughout the specification, when a portion is said to be "connected (linked, contacted, combined)" with another portion, this includes not only a case of being "directly connected" but also a case of being "indirectly connected" with another member in between. In addition, when a portion is said to "include" a certain component, this does not mean that other components are excluded, but that other components may be added, unless specifically stated to the contrary.

The terms used herein are merely used to describe specific embodiments and are not intended to limit the present invention. Singular expressions include plural expressions unless the context clearly dictates otherwise. In this specification, it should be understood terms such as "include" or "have" are to designate the presence of features, numbers, steps, operations, components, parts, or combinations thereof described in the specification, but are not to exclude in advance the possibility of the presence or addition of one or more other features, numbers, steps, operations, components, parts, or combinations thereof.

Hereinafter, embodiments of the present invention will be described in detail with reference to the accompanying drawings.

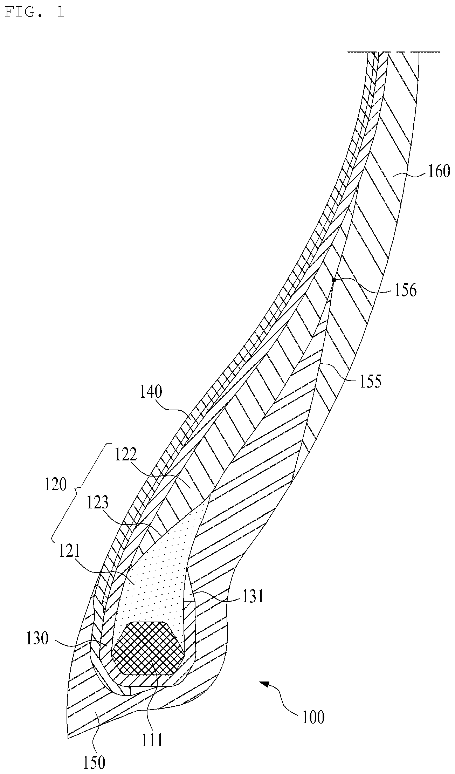

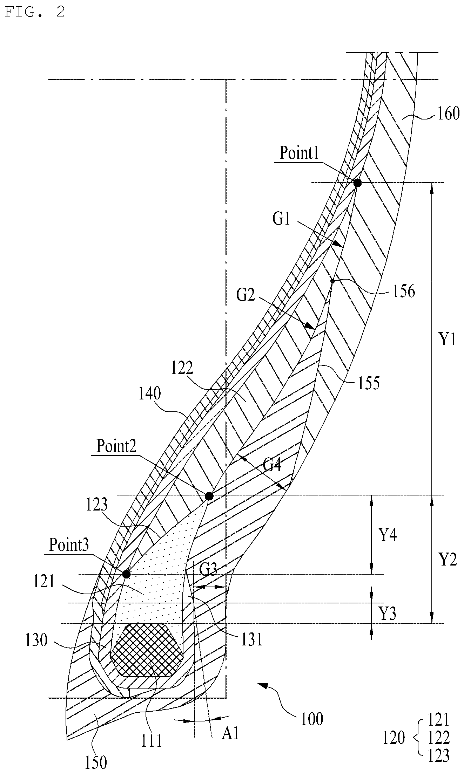

Referring to FIG. 1 and FIG. 2, a tire having a bead portion for improving transverse rigidity and durability according to an embodiment of the present invention includes: a bead bundle 111 positioned on the bead portion 100 of the tire; a bead filler 120 having a lower end portion coupled to an upper surface portion of the bead bundle 111 and disposed to extend from the bead bundle 111 to a side wall; a carcass 130 coupled to the inner surface of the side wall of the tire and disposed to extend to surround the inner surface of the bead filler 120 and the lower portion of the bead bundle 111; an inner liner 140 coupled to the inner surface of the carcass 130 and disposed to extend to the bottom surface of the carcass 130; rim cushion rubber 150 coupled to extend from the lower inner surface of the inner liner 140 to the bottom surface portion of the carcass 130 to surround one edge 131 of the carcass 130 and disposed to extend to the upper portion of the bead filler 120; and side wall rubber 160 coupled to to the upper portion of the carcass 130 to be disposed to extend to the rim cushion rubber 150, thereby being coupled to the upper end portion of the bead filler 120 and the rim cushion rubber 150.

In this embodiment, the one edge 131 corresponding to one end portion of the carcass 130 is positioned adjacent to the bead bundle 111, and below a rim flange of the tire.

The bead filler 120 may include: bead filler rubber 121 coupled to the upper surface portion of the bead bundle 111; and profile-type rubber 122 coupled to the bead filler rubber 121, wherein the upper end portion of the bead filler rubber 121 and the lower end portion of the profile-type rubber 122 are provided with first rubber coupling surfaces 123 that are coupled at an angle while being staggered from each other.

The upper portion of the bead filler rubber 121 may be coupled to the inner surface of the rim cushion rubber 150, and the lower portion thereof may be coupled to the carcass 130 to support the edge 131 of the carcass 130.

The upper end portion of the rim cushion rubber 150 and the lower end portion of the side wall rubber 160 may be provided with second rubber coupling surfaces 155 that are coupled at an angle while being staggered from each other.

One surface of the upper end portion of the profile-type rubber 122 may be coupled to the carcass 130 and the other surface thereof may be coupled to a boundary area 156 of the second rubber coupling surfaces 155.

The height Y1 from the upper end of the profile-type rubber 122 to the upper end of the bead filler rubber 121 may be set to 10 mm to 55 mm, the height Y2 from the upper end of the bead filler rubber 121 to the upper end of the bead bundle 111 may be set to 15 mm to 35 mm, the height Y3 of the edge 131 of the carcass 130 on the bead bundle 111 may be set to 5 mm to 15 mm, and the height Y4 from the lower end of the profile-type rubber 122 to the upper end of the bead filler 120 rubber may be set to 7 mm to 30 mm.

The height Y1+Y2 from the upper end of the profile-type rubber 122 to the upper surface portion of the bead bundle 111 to which the bead filler 120 rubber is coupled may be set to 36% to 50% of a tire cross-section height.

The profile-type rubber 122 may be provided with a thickness of 0.01 mm to 5.5 mm, and the thickness of the profile-type rubber 122 may be 0.5 mm to 1.5 mm at a lower side 5 mm away from the upper end of the profile-type rubber 122, and may be 1.2 mm to 2.8 mm at a lower side 10 mm away from the upper end of the profile-type rubber.

The thickness of the rim cushion rubber 150 measured at the lower end of the side wall rubber 160 may be 4.8 mm to 9 mm, and the thickness of the rim cushion rubber 150 measured at the edge of the carcass may be 2 mm to 5 mm.

Meanwhile, the profile-type rubber may have lower hardness than the bead filler rubber 120.

The details of implementation of an edge 131 according to the lower turn-up structure of a profile-type rubber 122, a bead filler 120, a carcass 130, and other bead portion shapes according to the present embodiment as above are as follows.

1. Point 2 P2 or point 3 P3 has a shape that starts between a profile type rubber 122, a carcass 130, and a bead filler 120. Point 2 P2 contacts the bead filler 120, and point 3 P3 contacts the carcass 130.

2. Y1+Y2 is implemented to be 36-50% of the tire section height.

3. Implementation is made such that Y1=10-55 mm, Y2=15-35 mm, Y3=5-15 mm, and Y4=7-30 **m.**

4. The profile-type rubber 122 is implemented to have a maximum gauge of 5.5 mm and become thinner as it approaches point 1 P1. Implementation is made such that G1=0.5-1.5 mm with a spacing distance of 5 mm from point 1 (P1), and G2=1.2-2.8 mm with a spacing distance of 10 mm.

5. Design is made such that G3=4.8 mm or more and G4=2.0 mm or more.

6. The angle of the turn-up carcass 130 A1 is implemented to be in the + direction eqaul to or greater than 0 degrees.

7. The properties of a rubber attachment of a profile type are designed to have lower hardness than the properties of the bead filler 120, and the rubber of the bead filler is designed to have high hardness.

For example, the profile-type rubber 122 is prepared to have hardness of 70 to 80 kgf/mm² and 85 to 95% of the 100% Modulus, and the bead filler rubber 122 is made to have hardness of 80 or more and 95% or more of the 100% Modulus.

The effects of applying the bead portion of the new carcass according to this embodiment are as follows.

### 1. KL (Lateral stiffness) improvement

1) As a result of FE finite element analysis, the KL improvement effect is 5.3%, which is as follows with the results under test conditions.
   - Tire size: 225/65R17H
   - Test condition: Air pressure 2.5kgf/cm2, load 604kgf(ETRTO Max. 71% of load), Rim width 6.5J
   - Comparison group and test results

   A (Comparison group): Carcass 1Ply STUH & General Bead Structure KL: 12.35kgf/mm
   B(This embodiment): Carcass 1Ply LTUH & New Bead Layout Structure KL: 13.01kgf/mm

In order to improve the dry handling performance of an actual vehicle, KL improvement is very effectively derived as in the theory below.

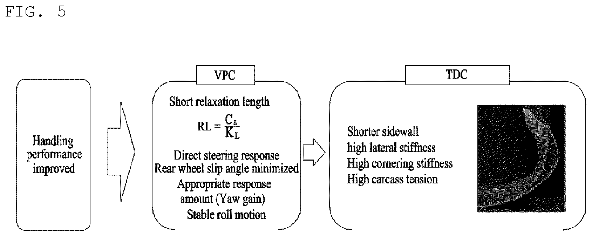

See FIG. 5.

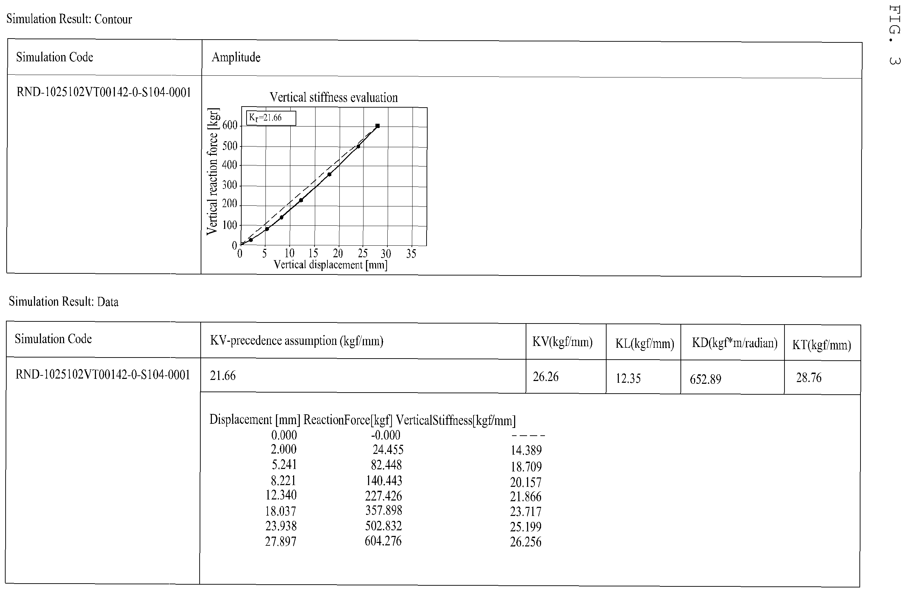

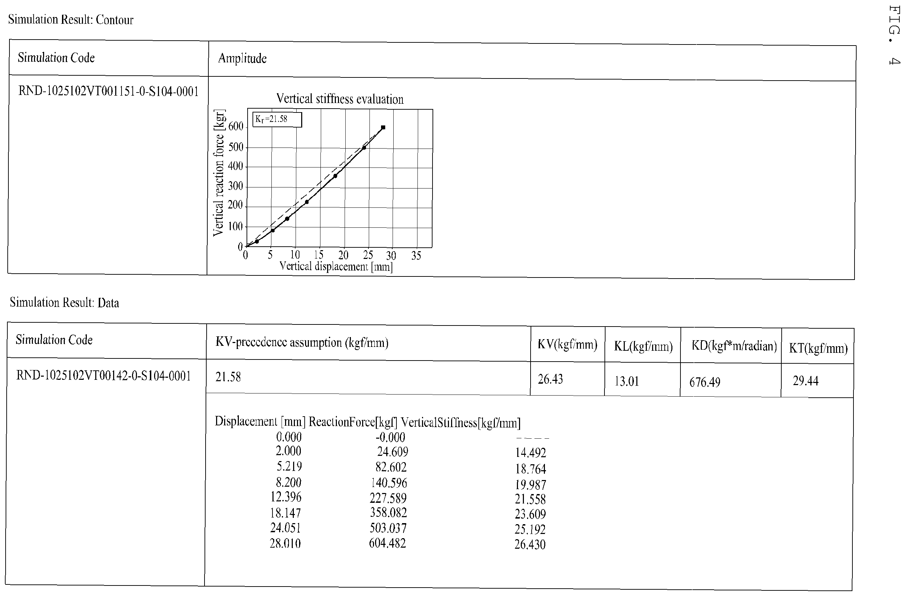

The weight saving effect according to the application of this embodiment compared to the comparative group is expected to be about 0.2 to 0.3 kg. That is, referring to FIGS. 3 and 4, the durability problem of the bead portion 100 is expected to be resolved by 99.99%.

The starting point of bead separation, where one end of the carcass 130 is separated from the existing bead portion 100, is the upper end portion of the rim flange, which is about 25 to 30 mm away from the bead bundle 111, and the reason for this is that the carcass 130 is located at that location and the carcass 130 changes to a compressed state when loaded.

The new layout structure of the carcass 130 according to the present embodiment is expected to resolve the separation structure problem of the carcass 130 from the bead by about 99.99% because the carcass 130 does not exist at the position where the carcass 130 is likely to be separated.

In addition, even according to the interpretation theory of the bead portion 100 accident, in a point where the starting point of bead separation where the carcass 130 is separated from the existing bead portion 100 is about 25-30 mm away from the bead bundle 111, which is the upper end portion of the rim flange, the carcass 130 always exists in a state of compressive stress in the range of air pressure 1.0-3.0 kgf/cm2 and load 400-1000 kgf.

At this time, the inner surface of the carcass is in a tensile state and the outer surface is in a compressed state, wherein the carcass 130 has strong resistance to tension but does not have resistance to compression and provides a cause for crack occurrence; however, if the LTUH structure is used compared to the MTUH at this point, the carcass 130 separated from the bead flange portion is eliminated, so that the durability problem of the bead portion 100 may be resolved.

For reference, Table 1 shows the turn-up type of the edge 131 side of the carcass 130 in the bead portion 100 of the tire.

**[Table1]**

| | Super TUH | Hight TUH | Middle TUH | Low TUH |
|---|---|---|---|---|
| Definition | A case where the Carcass Ending Point is located below 1Belt | A case where the Carcass Ending Point is located at Upper SH (SH more than 60% to 1Belt end) | A case where the Carcass Ending Point is located at Low SH (located at 40-60% of SH) | A case where the Carcass Ending Point is located below the Rim Check Line (SH less than 40%) |
| Cross-section | 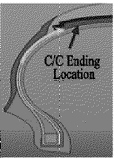 | 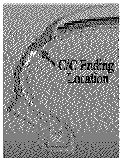 | 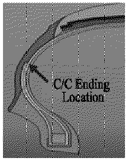 | 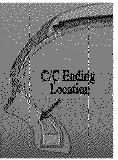 |
| Terminology notation | STUH | HTUH | MTUH | LTUH |

The description of the present invention described above is for illustrative purposes, and those skilled in the art will understand that the present invention is easily modifiable into other specific forms without changing the technical idea or essential features of the present invention. Therefore, the embodiments described above should be understood in all respects as illustrative and not restrictive. For example, each component described as single may be implemented in a distributed manner, and similarly, components described as distributed may also be implemented in a combined form.

The scope of the present invention is indicated by the claims described below, and all changes or modified forms derived from the meaning and scope of the claims and their equivalent concepts should be construed as being included in the scope of the present invention.

### <Explanation of reference numerals>

- 100:: bead portion
- 111:: bead bundle
- 120:: bead filler
- 121:: bead filler rubber
- 122:: profile-type rubber
- 123:: first rubber coupling surface
- 130:: carcass
- 131:: edge
- 140::: inner liner
- 150:: rim cushion rubber
- 160:: side wall rubber

## Claims

1. A tire having a bead portion for improving transverse rigidity and durability, comprising:
a bead bundle positioned on the bead portion of the tire;
a bead filler having a lower end portion coupled to an upper surface portion of the bead bundle and disposed to extend from the bead bundle to a side wall;
a carcass coupled to the inner surface of the side wall of the tire and disposed to extend to surround the inner surface of the bead filler and the lower portion of the bead bundle;
an inner liner coupled to the inner surface of the carcass and disposed to extend to the bottom surface of the carcass;
rim cushion rubber coupled to extend from the lower inner surface of the inner liner to the bottom surface portion of the carcass to surround one edge of the carcass and disposed to extend to the upper portion of the bead filler; and
side wall rubber coupled to to the upper portion of the carcass to be disposed to extend to the rim cushion rubber, thereby being coupled to the upper end portion of the bead filler and the rim cushion rubber,
wherein the one edge corresponding to one end portion of the carcass is positioned adjacent to the bead bundle, and below a rim flange of the tire.

2. The tire having a bead portion for improving transverse rigidity and durability of claim 1, wherein the bead filler comprises:
bead filler rubber coupled to the upper surface portion of the bead bundle; and
profile-type rubber coupled to the bead filler rubber,
wherein the upper end portion of the bead filler rubber and the lower end portion of the profile-type rubber are provided with first rubber coupling surfaces that are coupled at an angle while being staggered from each other.

3. The tire having a bead portion for improving transverse rigidity and durability of claim 2, wherein the upper portion of the bead filler rubber is coupled to the inner surface of the rim cushion rubber, and the lower portion thereof is coupled to the carcass to support the edge of the carcass.

4. The tire having a bead portion for improving transverse rigidity and durability of claim 2, wherein the upper end portion of the rim cushion rubber and the lower end portion of the side wall rubber are provided with second rubber coupling surfaces that are coupled at an angle while being staggered from each other.

5. The tire having a bead portion for improving transverse rigidity and durability of claim 4, wherein one surface of the upper end portion of the profile-type rubber is coupled to the carcass and the other surface thereof is coupled to a boundary area of the second rubber coupling surfaces.

6. The tire having a bead portion for improving transverse rigidity and durability of claim 5, wherein the height Y1 from the upper end of the profile-type rubber to the upper end of the bead filler rubber is set to 10 mm to 55 mm, the height Y2 from the upper end of the bead filler rubber to the upper end of the bead bundle is set to 15 mm to 35 mm, the height Y3 of the edge of the carcass on the bead bundle is set to 5 mm to 15 mm, and the height Y4 from the lower end of the profile-type rubber to the upper end of the bead filler rubber is set to 7 mm to 30 mm.

7. The tire having a bead portion for improving transverse rigidity and durability of claim 6, wherein the height Y1+Y2 from the upper end of the profile-type rubber to the upper surface portion of the bead bundle to which the bead filler rubber is coupled is set to 36% to 50% of a tire cross-section height.

8. The tire having a bead portion for improving transverse rigidity and durability of claim 6, wherein the profile-type rubber is provided with a thickness of 0.01 mm to 5.5 mm, and the thickness of the profile-type rubber is 0.5 mm to 1.5 mm at a lower side 5 mm away from the upper end of the profile-type rubber, and is 1.2 mm to 2.8 mm at a lower side 10 mm away from the upper end of the profile-type rubber.

9. The tire having a bead portion for improving transverse rigidity and durability of claim 6, wherein the thickness of the rim cushion rubber measured at the lower end of the side wall rubber is 4.8 mm to 9 mm, and the thickness of the rim cushion rubber measured at the edge of the carcass is 2 mm to 5 mm.

10. The tire having a bead portion for improving transverse rigidity and durability of claim 1, wherein the profile-type rubber has lower hardness than the bead filler rubber.
